# EUROPEAN PATENT SPECIFICATION

(11) **EP 4 406 770 B1**
(45) Date of publication and mention of the grant of the patent: **11.02.2026**
(21) Application number: 23863361.4
(22) Date of filing: 11.08.2023
(51) Int. Cl.: B60L 3/00, B60L 58/18, B60L 58/12, B60L 7/10, H02J 7/00, H01M 10/44, H01M 10/42, B60L 3/12, B60L 58/16, H01M 10/48

(54) **BATTERY PROTECTING DEVICE AND METHOD**
BATTERIESCHUTZVORRICHTUNG UND -VERFAHREN
DISPOSITIF ET PROCÉDÉ DE PROTECTION DE BATTERIE

(30) Priority: 08.09.2022 KR 20220114087
(43) Date of publication of application: 31.07.2024
(73) Proprietor: LG Energy Solution, Ltd., Seoul 07335 (KR)
(72) Inventor: KIM, Hak In, Daejeon 34122 (KR); PARK, Jisoo, Daejeon 34122 (KR)
(74) Representative: Plasseraud IP
(86) International application number: PCT/KR2023/011910
(87) International publication number: WO 2024/053881

(56) References cited:
- CN-A- 110 091 748
- CN-A- 114 047 448
- JP-A- 2020 058 169
- JP-A- 2022 039 880
- KR-A- 20150 077 666
- KR-A- 20160 077 882
- KR-B1- 102 188 634
- US-A1- 2012 056 598
- US-A1- 2014 370 940
- US-A1- 2015 229 151
- US-A1- 2016 082 860
- US-A1- 2022 000 186

## Description

### [Technical Field]

This application claims priority to and the benefit of Korean Patent Application No.10-2022-0114087 filed in the Korean Intellectual Property Office on September 8, 2022.

The present invention relates to a battery protecting device and method, and more particularly, to a battery protecting device and method for preventing lithium plating in a battery cell due to charging current during charging and discharging a battery.

### [Background Art]

As the price of energy sources rises due to the depletion of fossil fuels and interest in environmental pollution increases, a demand for secondary batteries as an eco-friendly alternative energy source is rapidly increasing.

Among secondary batteries, lithium batteries may be applied to various industrial fields such as mobile applications, automobiles, robots, and energy storage devices as a response to today's environmental regulations and high oil price issues.

These lithium batteries are generally classified into cylindrical, prismatic, or pouch types depending on a shape of the exterior material in which the electrode assembly is accommodated.

Among these, cylindrical batteries may be provided in a battery pack (Cell To Pack; CTP) structure including a plurality of battery cells.

Due to its nature of the battery cell, cylindrical batteries are subject to lithium plating caused from low-temperature charging or charging current due to regenerative braking which is generated by motors of cars and bicycles, and the lithium plating may cause ignition.

Accordingly, a battery protection device according to the prior art was provided by setting a condition to block charging of battery cells at temperature below 0°C, considering that the minimum charging temperature of a typical cylindrical battery cell is 0°C.

However, if a delay occurs before the condition is applied in the conventional battery protection device, battery cell charging may proceed for a while and lithium may precipitate (Li-plate) when such cases accumulate, which results in a risk that the battery cell may ignite.

Accordingly, when charging a battery cell according to the prior art, if the temperature of the battery cell falls below 0°C, a method of blocking charging current from being generated by the battery system and charger control may be used, but this method has a limit of difficulty when facing a battery system fault.

CN114047448 A relates to an apparatus for estimating the remaining time for performing adaptive charging of a battery. US2022/000186 A1 relates to a power supply for an inhalation device that is configured to respond to a temperature anomaly in a controller of the device.

### [Detailed Description of the Invention]

### [Technical Problem]

To obviate one or more problems of the related art, embodiments of the present disclosure provide a battery protection apparatus.

To obviate one or more problems of the related art, embodiments of the present disclosure also provide a battery protection method.

### [Technical Solution]

In order to achieve the objective of the present disclosure, an apparatus for protecting at least one battery cell located inside a battery system may include at least one processor and a memory configured to store at least one instruction executed by the at least one processor, wherein the at least one instruction may include an instruction to check accumulated charging time period of charging current applied to the battery cell under a temperature condition less than or equal to a predetermined threshold temperature; and an instruction to determine whether to permanently block charging and discharging of the battery cell by comparing the accumulated charging time period with a predetermined threshold time period.

The instruction to determine whether to permanently block charging and discharging of the battery cell may include an instruction to permanently block charging and discharging of the battery cell in the instance that the accumulated charging time period is greater than or equal to the threshold time period.

The instruction to determine whether to permanently block charging and discharging of the battery cell may include: an instruction to identify the operation mode of the battery cell in the instance that the accumulated charging time period is less than the threshold time period; and an instruction to compare the charging time period of the battery cell under the temperature condition less than or equal to the predetermined threshold temperature according to the operation mode with at least one predefined time period and to control charging and discharging of the battery cell according to the comparison result.

The instruction to control charging and discharging of the battery cell may include an instruction to: upon the battery cell being charged for more than or equal to a first time period under the temperature condition of less than or equal to the threshold temperature in a charge mode, control the battery system to prevent charging of the battery cell by transmitting a first control signal to the battery system.

The instruction to control charging and discharging of the battery cell may include an instruction to: upon the battery cell being charged for more than or equal to a second time period under the temperature condition of less than or equal to the threshold temperature in the charge mode, transmit a second control signal to the battery cell to block a charging switch of the battery cell to prevent charging of the battery cell.

The instruction to control charging and discharging of the battery cell may include an instruction to: upon the battery cell being charged for more than or equal to a third time period under a temperature condition of less than or equal to a predefined first discharge temperature in a discharge mode, transmit a third control signal to the battery system to control an amount of output current of the battery cell.

The instruction to control the amount of output current may include an instruction to control reducing the amount of output current required for the battery cell to a threshold value or less in the discharge mode.

The instruction to control charging and discharging of the battery cell may include an instruction to: upon the battery cell being charged for more than or equal to a fourth time period under a temperature condition of less than or equal to a predefined second discharge temperature in a discharge mode, transmit a fourth control signal to the battery system to block a switch within the battery system to prevent discharging of the battery cell.

The instruction to control charging and discharging of the battery cell may include an instruction to: upon the battery cell being charged for more than or equal to a fifth time period under a temperature condition of less than or equal to a predefined third discharge temperature in a discharge mode, transmit a fifth control signal to the battery cell to block a discharge switch of the battery cell.

The charging of the battery cell according to the operation mode may be generated by a charger in the charge mode and by regenerative braking current in the discharge mode.

The instruction to determine whether to permanently block charging and discharging of the battery cell may include an instruction to update the accumulated charging time period by reflecting the charging time in the accumulated charging time period.

The predetermined threshold time period may be a predetermined period as a charging time period during which lithium plating does not occur in the battery cell by adjusting a charging time period of the battery cell at a certain temperature.

According to another embodiment of the present disclosure, a method for protecting at least one battery cell located inside a battery system may include identifying accumulated charging time period of charging current applied to the battery cell under a temperature condition less than or equal to a predetermined threshold temperature; and determining whether to permanently block charging and discharging of the battery cell by comparing the accumulated charging time period with a predetermined threshold time period.

The determining whether to permanently block charging and discharging of the battery cell may include permanently blocking charging and discharging of the battery cell in the instance that the accumulated charging time period is greater than or equal to the threshold time period.

The determining whether to permanently block charging and discharging of the battery cell may include identifying the operation mode of the battery cell in the instance that the accumulated charging time period is less than the threshold time period; and comparing the charging time period of the battery cell under the temperature condition less than or equal to the predetermined threshold temperature according to the operation mode with at least one predefined time period and controlling charging and discharging of the battery cell according to the comparison result.

The controlling charging and discharging of the battery cell according to the comparison result may include, upon the battery cell being charged for more than or equal to a first time period under the temperature condition of less than or equal to the threshold temperature in a charge mode, controlling the battery system to prevent charging of the battery cell by transmitting a first control signal to the battery system.

The controlling charging and discharging of the battery cell according to the comparison result may include, upon the battery cell being charged for more than or equal to a second time period under the temperature condition of less than or equal to the threshold temperature in the charge mode, transmitting a second control signal to the battery cell to block a charging switch of the battery cell to prevent charging of the battery cell.

The controlling charging and discharging of the battery cell according to the comparison result may include, upon the battery cell being charged for more than or equal to a third time period under a temperature condition of less than or equal to a predefined first discharge temperature in a discharge mode, transmitting a third control signal to the battery system and controlling an amount of output current of the battery cell.

The controlling the amount of output current of the battery cell may include controlling to reduce the amount of output current required for the battery cell to a threshold value or less in the discharge mode.

The controlling charging and discharging of the battery cell according to the comparison result may include, upon the battery cell being charged for more than or equal to a fourth time period under a temperature condition of less than or equal to a predefined second discharge temperature in a discharge mode, transmitting a fourth control signal to the battery system to block a switch within the battery system to prevent discharging of the battery cell.

The controlling charging and discharging of the battery cell according to the comparison result may include, upon the battery cell being charged for more than or equal to a fifth time period under a temperature condition of less than or equal to a predefined third discharge temperature in a discharge mode, transmitting a fifth control signal to the battery cell to block a discharge switch of the battery cell.

The charging of the battery cell according to the operation mode may be generated by a charger in the charge mode and by regenerative braking current in the discharge mode.

The determining whether to permanently block charging and discharging of the battery cell may include updating the accumulated charging time period by reflecting the charging time in the accumulated charging time period.

The predetermined threshold time period may be a predetermined period as a charging time period during which lithium plating does not occur in the battery cell by adjusting a charging time period of the battery cell at a certain temperature.

### [Advantageous Effects]

The battery protecting device and method according to the embodiment of the present invention as described above can prevent battery cell ignition due to lithium plating occurring in a battery cell caused from charging current.

### [Brief Description of the Drawings]

FIG. 1 is a block diagram of a battery system to which embodiments of the present invention may be applied.
FIG. 2 is a block diagram of a battery protection apparatus according to embodiments of the present invention.
FIG. 3 is a flowchart for explaining a battery protection method operated by a processor in a battery protection apparatus according to embodiments of the present invention.
FIG. 4 is a flowchart illustrating a method of determining whether to permanently block a battery cell among the battery protection methods according to embodiments of the present invention.
FIG. 5 is a flowchart illustrating a method of controlling charging and discharging operations of a battery cell in a battery protection method according to embodiments of the present invention.
FIG. 6 is a flowchart for explaining operations according to control signals in charge mode among the battery protection method according to embodiments of the present invention.
FIG. 7 is a flowchart for explaining operations according to control signals in a discharge mode among the battery protection methods according to embodiments of the present invention.

1000: battery protection apparatus
100: memory
200: processor
300: transceiver
400: input interface
500: output interface
600: storage device
700: bus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

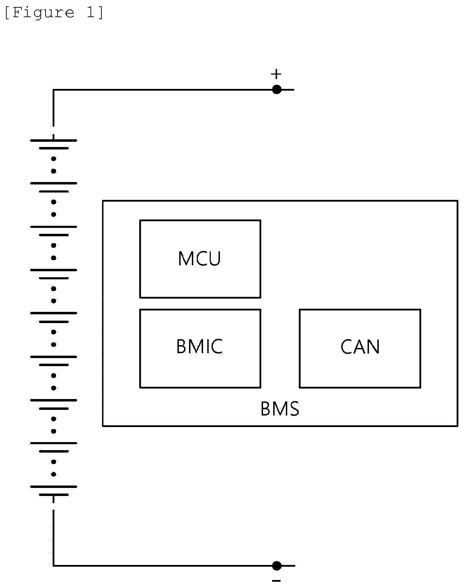

FIG. 1 is a block diagram of a battery system to which embodiments of the present invention may be applied.

Referring to FIG. 1, a battery pack or battery module may include a plurality of battery cells connected in series. The battery pack or module may be connected to a load through a positive terminal and a negative terminal to perform charging or discharging. The most commonly used battery cell is a lithium-ion (Li-Ion) battery cell.

A battery management system (BMS) may be connected to a battery module or battery pack.

The battery management system may monitor a current, a voltage and a temperature of each battery cell or module to be managed, calculate a state of charge (SOC) of the battery based on monitoring results to control charging and discharging. Here, the State of Charge (SOC) refers to a current state of charge of a battery, represented in percent points [%], and the State of Health (SOH) may be a current condition of a battery compared to its ideal conditions, represented in percent points [%].

The BMS may monitor battery cells, read cell voltages, and transmit them to other systems connected to the battery.

Furthermore, the battery management system monitors at least one electrical component constituting the battery system and passes their status data on to other systems. For this, the BMS includes a communication module for communicating with other systems in a device including the battery system.

The communication module of the BMS can communicate with other systems in the device using CAN (Controller Area Network). Here, components, modules or systems in the BMS are connected to each other through a CAN bus. Accordingly, the battery management system (BMS) may use CAN communication to remotely transmit status data obtained through monitoring of the battery pack or module and at least one electrical component constituting the battery management system (BMS) to other systems.

Furthermore, the battery management system (BMS) may equally balance charges of the battery cells in order to extend the life of the battery system.

The BMS may include various components such as a fuse, a current sensing element, a thermistor, a switch, and a balancer to perform such operations. In most cases, a micro controller unit (MCU) or a battery monitoring integrated chip (BMIC) for interworking with and controlling these components is additionally included in the BMS. Here, the BMIC may be located inside the battery management system (BMS) and may be an IC-type component that measures information such as voltage, temperature, and current of the battery cell/module. According to an embodiment, a battery management system (BMS) may be applied to an automobile.

Meanwhile, generally, a battery management system (BMS) is connected with a battery protection apparatus, and the battery protection apparatus blocks a charging and discharging circuit when a battery abnormality occurs. In other words, a general battery protection circuit limits use of the battery by blocking the charging and discharging circuit when an abnormality occurs in any one battery cell or module.

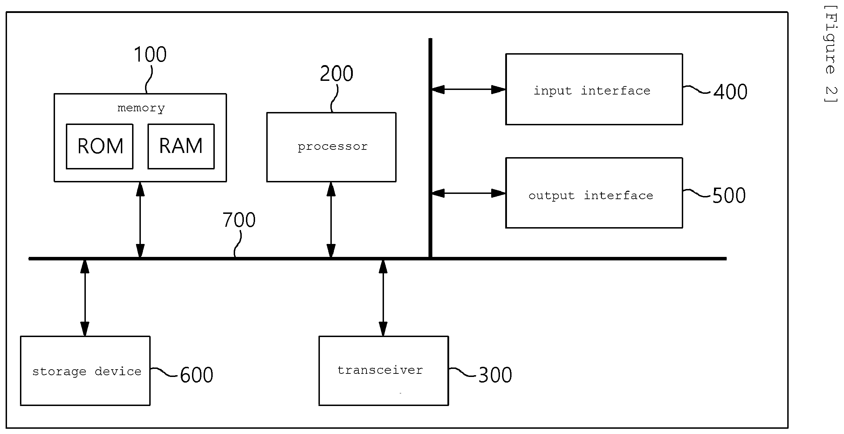

FIG. 2 is a block diagram of a battery protection apparatus according to embodiments of the present invention.

Referring to FIG. 2, the battery protection apparatus according to embodiments of the present invention may control charging and discharging operation of a battery cell by comparing a charging period of time at a certain temperature with a preset condition value if at least one battery cell in the battery system operates below a preset threshold temperature.

In addition, the battery protection apparatus may calculate accumulated charging time period of the battery cells to be charged below or equal to a predetermined threshold temperature and permanently control operation of the battery cells.

In more detail as to each component of the battery protection apparatus according to embodiments of the present invention, the battery protection apparatus may include a memory 100, a processor 200, a transceiver 300, an input interface 400, an output interface 500, and a storage device 600.

According to embodiments, respective components 100, 200, 300, 400, 500, 600 included in the battery protection apparatus may be connected by a bus 700 to communicate with each other.

The memory 100 and the storage device 600 among the components 100, 200, 300, 400, 500, 600 may include at least one of a volatile storage medium and a non-volatile storage medium. For example, the memory 100 and the storage device 600 may include at least one of read only memory (ROM) and random access memory (RAM).

Among them, the memory 100 may include at least one instruction executed by the processor 200.

According to embodiments, the at least one instruction may include an instruction to check accumulated charging time period of charging current applied to the battery cell under a temperature condition less than or equal to a predetermined threshold temperature; and an instruction to determine whether to permanently block charging and discharging of the battery cell by comparing the accumulated charging time period with a predetermined threshold time period.

The instruction to determine whether to permanently block charging and discharging of the battery cell may include an instruction to permanently block charging and discharging of the battery cell in the instance that the accumulated charging time period is greater than or equal to the threshold time period.

The instruction to determine whether to permanently block charging and discharging of the battery cell may include: an instruction to identify the operation mode of the battery cell in the instance that the accumulated charging time period is less than the threshold time period; and an instruction to compare the charging time period of the battery cell under the temperature condition less than or equal to the predetermined threshold temperature according to the operation mode with at least one predefined time period and to control charging and discharging of the battery cell according to the comparison result.

The instruction to control charging and discharging of the battery cell may include an instruction to: upon the battery cell being charged for more than or equal to a first time period under the temperature condition of less than or equal to the threshold temperature in a charge mode, control the battery system to prevent charging of the battery cell by transmitting a first control signal to the battery system.

The instruction to control charging and discharging of the battery cell may include an instruction to: upon the battery cell being charged for more than or equal to a second time period under the temperature condition of less than or equal to the threshold temperature in the charge mode, transmit a second control signal to the battery cell to block a charging switch of the battery cell to prevent charging of the battery cell.

The instruction to control charging and discharging of the battery cell may include an instruction to: upon the battery cell being charged for more than or equal to a third time period under a temperature condition of less than or equal to a predefined first discharge temperature in a discharge mode, transmit a third control signal to the battery system to control an amount of output current of the battery cell.

The instruction to control the amount of output current may include an instruction to control reducing the amount of output current required for the battery cell to a threshold value or less in the discharge mode.

The instruction to control charging and discharging of the battery cell may include an instruction to: upon the battery cell being charged for more than or equal to a fourth time period under a temperature condition of less than or equal to a predefined second discharge temperature in a discharge mode, transmit a fourth control signal to the battery system to block a switch within the battery system to prevent discharging of the battery cell.

The instruction to control charging and discharging of the battery cell may include an instruction to: upon the battery cell being charged for more than or equal to a fifth time period under a temperature condition of less than or equal to a predefined third discharge temperature in a discharge mode, transmit a fifth control signal to the battery cell to block a discharge switch of the battery cell.

The charging of the battery cell according to the operation mode may be generated by a charger in the charge mode and by regenerative braking current in the discharge mode.

The instruction to determine whether to permanently block charging and discharging of the battery cell may include an instruction to update the accumulated charging time period by reflecting the charging time in the accumulated charging time period.

The predetermined threshold time period may be a predetermined period as a charging time period during which lithium plating does not occur in the battery cell by adjusting a charging time period of the battery cell at a certain temperature.

Meanwhile, the processor 200 may mean a central processing unit (CPU), a graphics processing unit (GPU), or a dedicated processor on which methods according to embodiments of the present invention are performed.

The processor 200 may execute at least one program command stored in the memory 100 as described above.

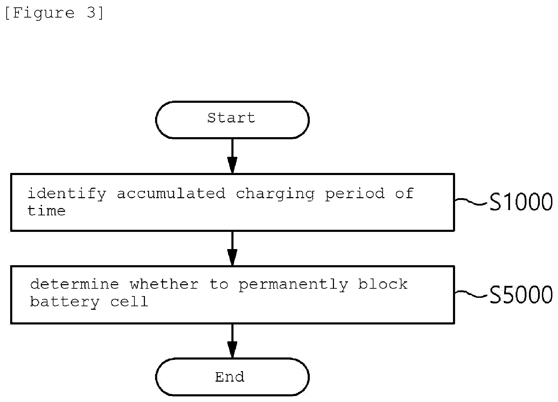

FIG. 3 is a flowchart for explaining a battery protection method operated by a processor in a battery protection apparatus according to embodiments of the present invention.

Referring to FIG. 3, the battery protection apparatus according to embodiments of the present invention may identify an accumulated charging period of time during which charging current is applied to at least one battery cell according to operations of the processor 200 (S1000).

In more detail, the battery protection apparatus may identify a accumulated charging period of time during which charging current is applied to at least one battery cell below a preset threshold temperature. In other words, the battery protection apparatus may check the accumulated charging period of time that accumulates the period during which the battery cell is charged equal to or under a temperature condition below a predetermined threshold temperature. Here, the predetermined threshold temperature may be 0°C or lower.

Thereafter, the battery protection apparatus may determine whether to permanently block the battery cell based on the accumulated charging time period (S5000).

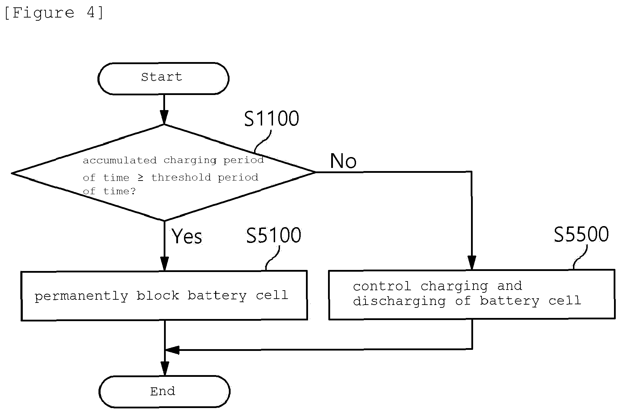

FIG. 4 is a flowchart illustrating a method of determining whether to permanently block a battery cell among the battery protection methods according to embodiments of the present invention.

Referring to FIG. 4, the battery protection apparatus may then compare the accumulated charging time period with a predefined threshold period of time (S1100).

Here, the predefined threshold period of time is information determined according to experimental data conducted in advance as follows and may be adjusted and predetermined to a charging time period of charging current applied to the battery at a certain temperature so that the determined charging time period ensures no lithium plating occurring in the battery cell.

### Preliminary experiment to determine threshold period of time

Battery cells with an initial voltage of 4.1V under a temperature condition of -20°C or lower were prepared. Afterwards, the charging and discharging cycles of the battery cells were applied differently at 10, 30, 50, 100 and 500 times, in other words, the charging time periods of the charging currents were set differently and charging current was applied at 5A per 0.25 seconds.

Here, a 5 second pause was interposed between charging and discharging operations. Thereafter, monitoring on whether lithium is deposited in the battery cell is performed, and any one of at least one charging time period in which lithium is not deposited may be selected as a threshold period of time.

Accordingly, the selected threshold period of time may be used as comparison data with the accumulated charging period of the battery cell in the battery protection apparatus according to embodiments of the present invention.

Referring again to FIG. 4, according to one embodiment, the battery protection apparatus may permanently block charging and discharging operations of the battery cell when the accumulated charging period of time is equal to or more than the predetermined threshold time period (S5100).

According to another embodiment, the battery protection apparatus may control charging and discharging operations of the battery cell when the accumulated charging period is less than the predetermined threshold time period (S5500).

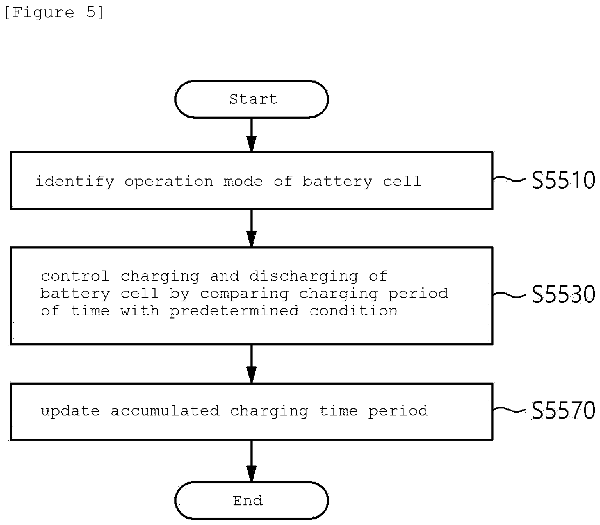

FIG. 5 is a flowchart illustrating a method of controlling charging and discharging operations of a battery cell in a battery protection method according to embodiments of the present invention.

Referring to FIG. 5, the battery protection apparatus may identify an operation mode of the battery cell when the accumulated charging time period is less than the predetermined threshold time period (S5510).

Thereafter, the battery protection apparatus may control charging and discharging operations of the battery cell by comparing the charging time period with preset conditions according to the operation mode of the battery cell (S5530). In other words, when the charging time period satisfies a preset condition according to the operation mode of the battery cell, the battery protection apparatus may transmit a control signal corresponding to the condition to an operating subject, thereby controlling charging and discharging operations of the battery cell. Here, the charging time period may be a charging period of time during which charging current is applied to the battery cell. In other words, it may be a charging time period during which the battery cell is being charged. For example, the preset condition may be a charging period in which the battery is continuously being charged at a preset threshold temperature.

Thereafter, the battery protection apparatus may update the accumulated charging period by reflecting the charging period into the accumulated charging period (S5570).

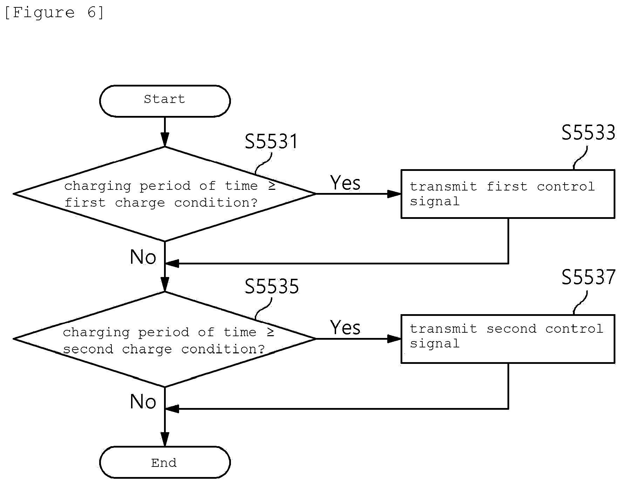

FIG. 6 is a flowchart for explaining operations according to control signals in charge mode among the battery protection method according to embodiments of the present invention.

Referring to FIG. 6, when in a charge mode, the battery protection apparatus may check whether the charging time period satisfies a first charge condition (S5531).

More specifically, when the battery protection apparatus operates in a charge mode, if charging of the battery cell continues for longer than a first time period under a temperature condition equal to or below a predetermined threshold temperature, the battery protection apparatus may output a first control signal and transmit it to the battery system (S5533). For example, the predetermined threshold temperature may be 0°C and the first time period may be 1 second.

When the battery system receives the first control signal, the battery system may control to prevent inflow of charging current applied to the battery cell. In other words, the battery system may stop charging the battery cell.

Thereafter, the battery protection apparatus may transmit a first release signal to the battery system when the temperature of the battery cell exceeds the predetermined threshold temperature and continues for equal to or longer than a second time period and the accumulated charging time period is less than the predetermined threshold time period. In other words, the battery protection apparatus may cancel the interruption of charging of the battery cells of the battery system.

Accordingly, the battery system may control the charging current to flow into the battery cell to re-charge the battery cells. For example, the predetermined threshold temperature may be 0°C, the second time period may be 3 seconds, and the predetermined threshold period may be less than 25sec.

Meanwhile, in a charge mode, the battery protection apparatus may check whether the charging time period satisfies a second charging condition (S5535).

More specifically, when the battery protection apparatus operates in a charge mode, if charging of the battery cell continues for more than a second time period under a temperature condition equal to or below the predetermined threshold temperature, the battery protection apparatus may output a second control signal and transmit it to the battery cells (S5537). For example, the predetermined threshold temperature may be 0°C, the second time period may be 3 seconds, and the preset threshold period may be less than 25sec.

When the battery cell receives the second control signal, the battery system may block a charge switch to prevent the charging current from flowing into the battery cells. Here, the charge switch may be a charge-FET (C-FET).

Thereafter, the battery protection apparatus may transmit a second release signal to the battery system if battery cell charging continues for a second time period during which the temperature of the battery cell exceeds the predetermined threshold temperature and if the accumulated charging time period is less than the predetermined threshold time period. Accordingly, the battery cells may resume charging by connecting the charge switch. For example, the predetermined threshold temperature may be 0°C, the second time period may be 3 seconds, and the preset threshold period may be 25sec.

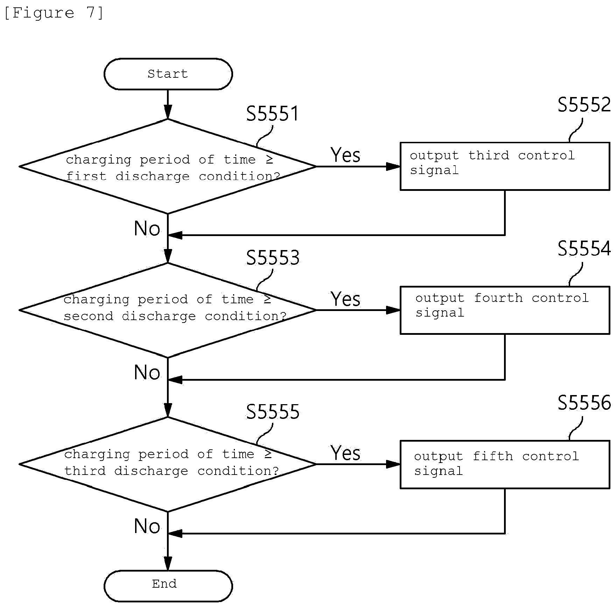

FIG. 7 is a flowchart for explaining operations according to control signals in a discharge mode among the battery protection methods according to embodiments of the present invention.

Referring to FIG. 7, when the battery protection apparatus is in discharge mode, the charging may be done by regenerative braking current. In other words, charging may be performed when the battery protection apparatus is in a discharge mode.

According embodiments, when in the discharge mode, the battery protection apparatus may identify whether the charging period of the charging current by the regenerative current satisfies a first discharge condition (S5551).

More specifically, when the battery protection apparatus operates in a discharge mode, if charging of the battery cell continues for more than a third time period at a first discharge temperature or less, the battery protection apparatus may output a third control signal and transmit it to the battery system (S5552). For example, the third control signal may be an output control signal. In addition, the first discharge temperature may be -20°C, and the third time period may be 1 second.

Accordingly, when the battery system receives the third control signal, the battery system may control the output of the battery cells by reducing the amount of output current required for the battery cells.

Thereafter, the battery protection apparatus may transmit a third release signal to the battery system when the temperature of the battery cells rises above the predetermined threshold temperature and the accumulated charging period is less than the predetermined threshold period. Accordingly, the battery system may stop output control of the battery cells, so that the battery cells may be discharged as its original state.

Meanwhile, when in the discharge mode, the battery protection apparatus may check whether the charging period of the charging current by the regenerative current satisfies a second discharge condition (S5553).

More specifically, when the battery protection apparatus operates in a discharge mode, if charging of the battery cell continues for more than a fourth time period at a second discharge temperature or lower, the battery protection apparatus may output a fourth control signal and transmit it to the battery system(S5554).

Accordingly, the battery system may block discharging of the battery cell when the fourth control signal is received. For example, the second discharge temperature may be -20°C, and the fourth period may be 1 second.

Thereafter, when the temperature of the battery cell exceeds the second discharge temperature, the accumulated charging time period is less than the predetermined threshold time period, and the battery cells are in an initialization state, the battery protection apparatus may transmit a fourth release signal to the battery system. Accordingly, the battery system may cancel the blocking of battery cell discharge. In other words, the battery cells may be re-discharged.

Additionally, in the discharge mode, the battery protection apparatus may check whether the charging period of the charging current by the regenerative braking current satisfies a third discharge condition (S5555).

More specifically, when the battery protection apparatus operates in a discharge mode, if charging of the battery cell continues for more than a fifth time period under a temperature condition equal to or below the third discharge temperature, the battery protection apparatus may output a fifth control signal and transmit it to the battery cells (S5556). For example, the third discharge temperature may be -20°C, and the fifth time period may be 3 seconds.

Accordingly, when the battery cell receives the fifth control signal, it may block a discharge switch to prevent charging current from flowing into the battery cell. Here, the discharge switch may be a discharge-FET (D-FET).

Thereafter, when the temperature of the battery cell exceeds the third discharge temperature, the accumulated charging period is less than a predetermined threshold period, and the battery cells are in an initialization state, the battery protection apparatus may transmit the fifth release signal to the battery system.

Accordingly, the battery cells may resume discharging by connecting the discharge switch.

The battery protecting device and method according to embodiments of the present invention have been described above.

The battery protecting device and method according to embodiments of the present invention may identify accumulated charging time period of charging current applied to the battery cell and determine whether to permanently block charging and discharging of the battery cell by comparing the accumulated charging time period with a predetermined threshold time period, thereby preventing battery cell ignition due to lithium plating occurring in the battery cell caused from charging current.

The operations of the method according to the embodiments and the experiment examples of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also high-level language code that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the area of the present invention described in the appending claims.

## Claims

1. An apparatus for protecting at least one battery cell located inside a battery system, the apparatus comprising:
at least one processor (200); and
a memory (100) configured to store at least one instruction executed by the at least one processor (200),
wherein the at least one instruction includes:
an instruction to identify accumulated charging time period of charging current applied to the battery cell under a temperature condition less than or equal to a predetermined threshold temperature; and
an instruction to determine whether to permanently block charging and discharging of the battery cell by comparing the accumulated charging time period with a predetermined threshold time period.

2. The apparatus of claim 1, wherein the instruction to determine whether to permanently block charging and discharging of the battery cell includes an instruction to permanently block charging and discharging of the battery cell in the instance that the accumulated charging time period is greater than or equal to the threshold time period.

3. The apparatus of claim 1, wherein the instruction to determine whether to permanently block charging and discharging of the battery cell includes:
an instruction to identify the operation mode of the battery cell in the instance that the accumulated charging time period is less than the threshold time period; and
an instruction to compare the charging time period of the battery cell under the temperature condition less than or equal to the predetermined threshold temperature according to the operation mode with at least one predefined time period and to control charging and discharging of the battery cell according to the comparison result.

4. The apparatus of claim 3, wherein the instruction to control charging and discharging of the battery cell includes an instruction to:
upon the battery cell being charged for more than or equal to a first time period under the temperature condition of less than or equal to the threshold temperature in a charge mode,
control the battery system to prevent charging of the battery cell by transmitting a first control signal to the battery system.

5. The apparatus of claim 3, wherein the instruction to control charging and discharging of the battery cell includes an instruction to:
upon the battery cell being charged for more than or equal to a second time period under the temperature condition of less than or equal to the threshold temperature in the charge mode,
transmit a second control signal to the battery cell to block a charging switch of the battery cell to prevent charging of the battery cell.

6. The apparatus of claim 3, wherein the instruction to control charging and discharging of the battery cell includes an instruction to:
upon the battery cell being charged for more than or equal to a third time period under a temperature condition of less than or equal to a predefined first discharge temperature in a discharge mode,
transmit a third control signal to the battery system to control an amount of output current of the battery cell.

7. The apparatus of claim 6, wherein the instruction to control the amount of output current includes an instruction to control reducing the amount of output current required for the battery cell to a threshold value or less in the discharge mode.

8. The apparatus of claim 3, wherein the instruction to control charging and discharging of the battery cell includes an instruction to:
upon the battery cell being charged for more than or equal to a fourth time period under a temperature condition of less than or equal to a predefined second discharge temperature in a discharge mode,
transmit a fourth control signal to the battery system to block a switch within the battery system to prevent discharging of the battery cell.

9. The apparatus of claim 3, wherein the instruction to control charging and discharging of the battery cell includes an instruction to:
upon the battery cell being charged for more than or equal to a fifth time period under a temperature condition of less than or equal to a predefined third discharge temperature in a discharge mode,
transmit a fifth control signal to the battery cell to block a discharge switch of the battery cell.

10. The apparatus of claim 3, wherein the instruction to determine whether to permanently block charging and discharging of the battery cell includes an instruction to update the accumulated charging time period by reflecting the charging time in the accumulated charging time period.

11. A method for protecting at least one battery cell located inside a battery system, the method comprising:
identifying (S1000) accumulated charging time period of charging current applied to the battery cell under a temperature condition less than or equal to a predetermined threshold temperature; and
determining (S5000) whether to permanently block charging and discharging of the battery cell by comparing the accumulated charging time period with a predetermined threshold time period.

12. The method of claim 13, wherein the determining (S5000) whether to permanently block charging and discharging of the battery cell includes permanently blocking charging and discharging of the battery cell in the instance that the accumulated charging time period is greater than or equal to the threshold time period.

13. The method of claim 13, wherein the determining whether to permanently block charging and discharging of the battery cell includes:
identifying (S5510) the operation mode of the battery cell in the instance that the accumulated charging time period is less than the threshold time period; and
comparing (S5530) the charging time period of the battery cell under the temperature condition less than or equal to the predetermined threshold temperature according to the operation mode with at least one predefined time period and controlling charging and discharging of the battery cell according to the comparison result.

14. The method of claim 13, wherein the controlling charging and discharging of the battery cell according to the comparison result includes, upon the battery cell being charged for more than or equal to a first time period under the temperature condition of less than or equal to the threshold temperature in a charge mode, controlling the battery system to prevent charging of the battery cell by transmitting a first control signal to the battery system.

15. The method of claim 13, wherein the controlling charging and discharging of the battery cell according to the comparison result includes, upon the battery cell being charged for more than or equal to a second time period under the temperature condition of less than or equal to the threshold temperature in the charge mode, transmitting a second control signal to the battery cell to block a charging switch of the battery cell to prevent charging of the battery cell.

16. The method of claim 13, wherein the controlling charging and discharging of the battery cell according to the comparison result includes, upon the battery cell being charged for more than or equal to a third time period under a temperature condition of less than or equal to a predefined first discharge temperature in a discharge mode, transmitting a third control signal to the battery system and controlling an amount of output current of the battery cell.

17. The method of claim 16, wherein the controlling the amount of output current of the battery cell includes controlling to reduce the amount of output current required for the battery cell to a threshold value or less in the discharge mode.

18. The method of claim 13, wherein the controlling charging and discharging of the battery cell according to the comparison result includes, upon the battery cell being charged for more than or equal to a fourth time period under a temperature condition of less than or equal to a predefined second discharge temperature in a discharge mode, transmitting a fourth control signal to the battery system to block a switch within the battery system to prevent discharging of the battery cell.

19. The method of claim 13, wherein the controlling charging and discharging of the battery cell according to the comparison result includes, upon the battery cell being charged for more than or equal to a fifth time period under a temperature condition of less than or equal to a predefined third discharge temperature in a discharge mode, transmitting a fifth control signal to the battery cell to block a discharge switch of the battery cell.

20. The method of claim 13, wherein the determining whether to permanently block charging and discharging of the battery cell includes updating the accumulated charging time period by reflecting the charging time in the accumulated charging time period.

## Patentansprüche

1. Vorrichtung zum Schützen wenigstens einer Batteriezelle, welche in einem Batteriesystem angeordnet ist, die Vorrichtung umfassend:
wenigstens einen Prozessor (200); und
einen Speicher (100), welcher dazu eingerichtet ist, wenigstens eine Anweisung zu speichern, welche durch den wenigstens einen Prozessor (200) ausgeführt ist,
wobei die wenigstens eine Anweisung umfasst:
eine Anweisung, um akkumulierte Ladezeitperioden eines Ladens eines Stroms zu identifizieren, welcher auf die Batteriezelle unter einer Temperaturbedingung aufgebracht ist, welche geringer als oder gleich wie eine vorbestimmte Schwellenwerttemperatur ist; und
eine Anweisung, zu bestimmen, ob ein Laden und Entladen der Batteriezelle permanent zu blockieren ist, durch ein Vergleichen der akkumulierten Ladezeitperiode mit einer vorbestimmten Schwellenwertzeitperiode.

2. Vorrichtung nach Anspruch 1, wobei die Anweisung, zu bestimmen, ob ein Laden und Entladen der Batteriezelle permanent zu blockieren ist, eine Anweisung umfasst, um das Laden und Entladen der Batteriezelle für den Fall zu blockieren, dass die akkumulierte Ladezeitperiode größer als oder gleich wie die Schwellenwertzeitperiode ist.

3. Vorrichtung nach Anspruch 1, wobei die Anweisung, zu bestimmen, ob ein Laden und Entladen der Batteriezelle permanent zu blockieren ist, umfasst:
eine Anweisung, um den Betriebsmodus der Batteriezelle für den Fall zu identifizieren, dass die akkumulierte Ladezeitperiode geringer ist als die Schwellenwertzeitperiode; und
eine Anweisung, um die Ladezeitperiode der Batteriezelle unter der Temperaturbedingung, welche geringer als oder gleich wie die vorbestimmte Schwellenwertzeitperiode ist, gemäß dem Betriebsmodus mit wenigstens einer vordefinierten Zeitperiode zu vergleichen und ein Laden und Entladen der Batteriezelle gemäß dem Vergleichsergebnis zu steuern.

4. Vorrichtung nach Anspruch 3, wobei die Anweisung, um ein Laden und Entladen der Batteriezelle zu steuern, eine Anweisung umfasst, zum:
wenn die Batteriezelle länger als oder gleich einer ersten Zeitperiode unter der Temperaturbedingung von weniger als oder gleich der Schwellenwerttemperatur in einem Lademodus geladen wird,
Steuern des Batteriesystems, um ein Laden der Batteriezelle durch ein Übertragen eines ersten Steuersignals auf das Batteriesystem zu verhindern.

5. Vorrichtung nach Anspruch 3, wobei die Anweisung, um ein Laden und Entladen der Batteriezelle zu steuern, eine Anweisung umfasst, zum:
wenn die Batteriezelle länger als oder gleich einer zweiten Zeitperiode unter der Temperaturbedingung von weniger als oder gleich der Schwellenwerttemperatur in dem Lademodus geladen wird,
Übertragen eines zweiten Steuersignals auf die Batteriezelle, um einen Ladeschalter der Batteriezelle zu blockieren, um ein Laden der Batteriezelle zu verhindern.

6. Vorrichtung nach Anspruch 3, wobei die Anweisung, um ein Laden und Entladen der Batteriezelle zu steuern, eine Anweisung umfasst, zum:
wenn die Batteriezelle länger als oder gleich einer dritten Zeitperiode unter einer Temperaturbedingung von weniger als oder gleich einer vordefinierten ersten Entladetemperatur in einem Entlademodus geladen wird,
Übertragen eines dritten Steuersignals auf das Batteriesystem, um eine Menge eines Ausgabestroms der Batteriezelle zu steuern.

7. Vorrichtung nach Anspruch 6, wobei die Anweisung, um die Menge eines Ausgabestroms zu steuern, eine Anweisung umfasst, um eine für die Batteriezelle benötigte Menge eines Ausgabestroms auf einen Schwellenwert oder weniger in dem Entlademodus zu reduzieren.

8. Vorrichtung nach Anspruch 3, wobei die Anweisung, um ein Laden und Entladen der Batteriezelle zu steuern, eine Anweisung umfasst, zum:
wenn die Batteriezelle länger als oder gleich einer vierten Zeitperiode unter einer Temperaturbedingung von weniger als oder gleich einer vordefinierten zweiten Entladetemperatur in einem Entlademodus geladen wird,
Übertragen eines vierten Steuersignals auf das Batteriesystem, um einen Schalter innerhalb des Batteriesystems zu blockieren, um ein Entladen der Batteriezelle zu verhindern.

9. Vorrichtung nach Anspruch 3, wobei die Anweisung, um ein Laden und Entladen der Batteriezelle zu steuern, eine Anweisung umfasst, zum:
wenn die Batteriezelle länger als oder gleich einer fünften Zeitperiode unter einer Temperaturbedingung von weniger als oder gleich einer vordefinierten dritten Entladetemperatur in einem Entlademodus geladen wird,
Übertragen eines fünften Steuersignals auf die Batteriezelle, um einen Entladeschalter der Batteriezelle zu blockieren.

10. Vorrichtung nach Anspruch 3, wobei die Anweisung, um zu bestimmen, ob ein Laden und Entladen der Batteriezelle permanent zu blockieren ist, eine Anweisung umfasst, die akkumulierte Ladezeitperiode durch ein Reflektieren der Ladezeit in der akkumulierten Ladezeitperiode zu aktualisieren.

11. Verfahren zum Schützen wenigstens einer Batteriezelle, welche innerhalb eines Batteriesystems angeordnet ist, das Verfahren umfassend:
Identifizieren (S1000) einer akkumulierten Ladezeitperiode eines Ladestroms, welcher auf eine Batteriezelle unter einer Temperaturbedingung von weniger als oder gleich einer vorbestimmten Schwellenwerttemperatur aufgebracht wird; und
Bestimmen (S5000), ob ein Laden und Entladen der Batteriezelle permanent zu blockieren ist, durch ein Vergleichen der akkumulierten Ladezeitperiode mit einer vorbestimmten Schwellenwertzeitperiode.

12. Verfahren nach Anspruch 13, wobei das Bestimmen (S5000), ob ein Laden und Entladen der Batteriezelle permanent zu blockieren ist, ein permanentes Blockieren eines Ladens und Entladens der Batteriezelle für den Fall umfasst, dass die akkumulierte Ladezeitperiode größer als oder gleich der Schwellenwertzeitperiode ist.

13. Verfahren nach Anspruch 13, wobei das Bestimmen, ob ein Laden und Entladen der Batteriezelle permanent zu blockieren ist, umfasst:
Identifizieren (S5510) des Betriebsmodus der Batteriezelle für den Fall, dass die akkumulierte Ladezeitperiode geringer ist als die Schwellenwertzeitperiode; und
Vergleichen (S5530) der Ladezeitperiode der Batteriezelle unter der Temperaturbedingung, welche geringer als oder gleich der vorbestimmten Schwellenwerttemperatur ist, gemäß dem Betriebsmodus mit wenigstens einer vordefinierten Zeitperiode und Steuern eines Ladens und Entladens der Batteriezelle gemäß dem Vergleichsergebnis.

14. Verfahren nach Anspruch 13, wobei das Steuern eines Ladens und Entladens der Batteriezelle gemäß dem Vergleichsergebnis, wenn die Batteriezelle für mehr als oder gleich einer ersten Zeitperiode unter der Temperaturbedingung von weniger als oder gleich der Schwellenwerttemperatur in einem Lademodus geladen wird, ein Steuern des Batteriesystems umfasst, um ein Laden der Batteriezelle durch ein Übertragen eines ersten Steuersignals auf das Batteriesystem zu verhindern.

15. Verfahren nach Anspruch 13, wobei das Steuern eines Ladens und Entladens der Batteriezelle gemäß dem Vergleichsergebnis, wenn die Batteriezelle für mehr als oder gleich einer zweiten Zeitperiode unter der Temperaturbedingung von weniger als oder gleich der Schwellenwerttemperatur in dem Lademodus geladen wird, ein Übertragen eines zweiten Steuersignals auf die Batteriezelle umfasst, um einen Ladeschalter der Batteriezelle zu blockieren, um ein Laden der Batteriezelle zu verhindern.

16. Verfahren nach Anspruch 13, wobei das Steuern eines Ladens und Entladens der Batteriezelle gemäß dem Vergleichsergebnis, wenn die Batteriezelle für mehr als oder gleich einer dritten Zeitperiode unter einer Temperaturbedingung von weniger als oder gleich einer vordefinierten ersten Entladetemperatur in einem Entlademodus geladen wird, ein Übertragen eines dritten Steuersignals auf das Batteriesystem und ein Steuern einer Menge eines Ausgabestroms der Batteriezelle umfasst.

17. Verfahren nach Anspruch 16, wobei das Steuern der Menge eines Ausgabestroms der Batteriezelle ein Steuern umfasst, um die Menge eines für die Batteriezelle benötigten Ausgabestroms auf einen Schwellenwert oder weniger in dem Entlademodus zu reduzieren.

18. Verfahren nach Anspruch 13, wobei das Steuern eines Ladens und Entladens der Batteriezelle gemäß dem Vergleichsergebnis, wenn die Batteriezelle für mehr als oder gleich einer vierten Zeitperiode unter einer Temperaturbedingung von weniger als oder gleich einer vordefinierten zweiten Entladetemperatur in einem Entlademodus geladen wird, ein Übertragen eines vierten Steuersignals auf das Batteriesystem umfasst, um einen Schalter innerhalb des Batteriesystem zu blockieren, um ein Entladen der Batteriezelle zu verhindern.

19. Verfahren nach Anspruch 13, wobei das Steuern eines Ladens und Entladens der Batteriezelle gemäß dem Vergleichsergebnis, wenn die Batteriezelle für mehr als oder gleich einer fünften Zeitperiode unter einer Temperaturbedingung von weniger als oder gleich einer vordefinierten dritten Entladetemperatur in einem Entlademodus geladen wird, ein Übertragen eines fünften Steuersignals auf die Batteriezelle umfasst, um ein Entladeschalter der Batteriezelle zu blockieren.

20. Verfahren nach Anspruch 13, wobei das Bestimmen, ob ein Laden und Entladen der Batteriezelle permanent zu blockieren ist, ein Aktualisieren der akkumulierten Ladezeitperiode durch ein Reflektieren der Ladezeit in der akkumulierten Ladezeitperiode umfasst.

## Revendications

1. Appareil pour protéger au moins une cellule de batterie située à l'intérieur d'un système de batterie, l'appareil comprenant :
au moins un processeur (200) ; et
une mémoire (100) configurée pour stocker au moins une instruction exécutée par l'au moins un processeur (200),
dans lequel l'au moins une instruction inclut :
une instruction d'identifier une période de temps de charge accumulée de courant de charge appliqué à la cellule de batterie dans une condition de température inférieure ou égale à une température seuil prédéterminée ; et
une instruction de déterminer s'il convient de bloquer de manière permanente la charge et la décharge de la cellule de batterie par comparaison de la période de temps de charge accumulée à une période de temps seuil prédéterminée.

2. Appareil selon la revendication 1, dans lequel l'instruction de déterminer s'il convient de bloquer de manière permanente la charge et la décharge de la cellule de batterie inclut une instruction de bloquer de manière permanente la charge et la décharge de la cellule de batterie dans le cas où la période de temps de charge accumulée est supérieure ou égale à la période de temps seuil.

3. Appareil selon la revendication 1, dans lequel l'instruction de déterminer s'il convient de bloquer de manière permanente la charge et la décharge de la cellule de batterie inclut :
une instruction d'identifier le mode de fonctionnement de la cellule de batterie dans le cas où la période de temps de charge accumulée est inférieure à la période de temps seuil ; et
une instruction de comparer la période de temps de charge de la cellule de batterie dans la condition de température inférieure ou égale à la température seuil prédéterminée selon le mode de fonctionnement à au moins une période de temps prédéfinie et de commander la charge et la décharge de la cellule de batterie selon le résultat de comparaison.

4. Appareil selon la revendication 3, dans lequel l'instruction de commander la charge et la décharge de la cellule de batterie inclut une instruction de :
lorsque la cellule de batterie est chargée pendant une durée supérieure ou égale à une première période de temps dans la condition de température inférieure ou égale à la température seuil dans un mode de charge,
commander le système de batterie pour empêcher la charge de la cellule de batterie par transmission d'un premier signal de commande au système de batterie.

5. Appareil selon la revendication 3, dans lequel l'instruction de commander la charge et la décharge de la cellule de batterie inclut une instruction de :
lorsque la cellule de batterie est chargée pendant une durée supérieure ou égale à une deuxième période de temps dans la condition de température inférieure ou égale à la température seuil dans le mode de charge,
transmettre un deuxième signal de commande à la cellule de batterie pour bloquer un commutateur de charge de la cellule de batterie afin d'empêcher la charge de la cellule de batterie.

6. Appareil selon la revendication 3, dans lequel l'instruction de commander la charge et la décharge de la cellule de batterie inclut une instruction de :
lorsque la cellule de batterie est chargée pendant une durée supérieure ou égale à une troisième période de temps dans une condition de température inférieure ou égale à une première température de décharge prédéfinie dans un mode de décharge,
transmettre un troisième signal de commande au système de batterie pour commander une quantité de courant de sortie de la cellule de batterie.

7. Appareil selon la revendication 6, dans lequel l'instruction de commander la quantité de courant de sortie inclut une instruction de commander la réduction de la quantité de courant de sortie requise pour la cellule de batterie à une valeur seuil ou inférieure dans le mode de décharge.

8. Appareil selon la revendication 3, dans lequel l'instruction de commander la charge et la décharge de la cellule de batterie inclut une instruction de :
lorsque la cellule de batterie est chargée pendant une durée supérieure ou égale à une quatrième période de temps dans une condition de température inférieure ou égale à une deuxième température de décharge prédéfinie dans un mode de décharge,
transmettre un quatrième signal de commande au système de batterie pour bloquer un commutateur à l'intérieur du système de batterie afin d'empêcher la décharge de la cellule de batterie.

9. Appareil selon la revendication 3, dans lequel l'instruction de commander la charge et la décharge de la cellule de batterie inclut une instruction de :
lorsque la cellule de batterie est chargée pendant une durée supérieure ou égale à une cinquième période de temps dans une condition de température inférieure ou égale à une troisième température de décharge prédéfinie dans un mode de décharge,
transmettre un cinquième signal de commande à la cellule de batterie pour bloquer un commutateur de décharge de la cellule de batterie.

10. Appareil selon la revendication 3, dans lequel l'instruction de déterminer s'il convient de bloquer de manière permanente la charge et la décharge de la cellule de batterie inclut une instruction de mettre à jour la période de temps de charge accumulée par reflet du temps de charge dans la période de temps de charge accumulée.

11. Procédé pour protéger au moins une cellule de batterie située à l'intérieur d'un système de batterie, le procédé comprenant :
l'identification (S1000) d'une période de temps de charge accumulée de courant de charge appliqué à la cellule de batterie dans une condition de température inférieure ou égale à une température seuil prédéterminée ; et
le fait de déterminer (S5000) s'il convient de bloquer de manière permanente la charge et la décharge de la cellule de batterie par comparaison de la période de temps de charge accumulée à une période de temps seuil prédéterminée.

12. Procédé selon la revendication 13, dans lequel le fait de déterminer (S5000) s'il convient de bloquer de manière permanente la charge et la décharge de la cellule de batterie inclut le blocage permanent de la charge et de la décharge de la cellule de batterie dans le cas où la période de temps de charge accumulée est supérieure ou égale à la période de temps seuil.

13. Procédé selon la revendication 13, dans lequel le fait de déterminer s'il convient de bloquer de manière permanente la charge et la décharge de la cellule de batterie inclut :
l'identification (S5510) du mode de fonctionnement de la cellule de batterie dans le cas où la période de temps de charge accumulée est inférieure à la période de temps seuil ; et
la comparaison (S5530) de la période de temps de charge de la cellule de batterie dans la condition de température inférieure ou égale à la température seuil prédéterminée selon le mode de fonctionnement à au moins une période de temps prédéfinie et la commande de la charge et de la décharge de la cellule de batterie selon le résultat de comparaison.

14. Procédé selon la revendication 13, dans lequel la commande de la charge et de la décharge de la cellule de batterie selon le résultat de comparaison inclut, lorsque la cellule de batterie est chargée pendant une durée supérieure ou égale à une première période de temps dans la condition de température inférieure ou égale à la température seuil dans un mode de charge, la commande du système de batterie pour empêcher la charge de la cellule de batterie par transmission d'un premier signal de commande au système de batterie.

15. Procédé selon la revendication 13, dans lequel la commande de la charge et de la décharge de la cellule de batterie selon le résultat de comparaison inclut, lorsque la cellule de batterie est chargée pendant une durée supérieure ou égale à une deuxième période de temps dans la condition de température inférieure ou égale à la température seuil dans le mode de charge, la transmission d'un deuxième signal de commande à la cellule de batterie pour bloquer un commutateur de charge de la cellule de batterie afin d'empêcher la charge de la cellule de batterie.

16. Procédé selon la revendication 13, dans lequel la commande de la charge et de la décharge de la cellule de batterie selon le résultat de comparaison inclut, lorsque la cellule de batterie est chargée pendant une durée supérieure ou égale à une troisième période de temps dans une condition de température inférieure ou égale à une première température de décharge prédéfinie dans un mode de décharge, la transmission d'un troisième signal de commande au système de batterie et la commande d'une quantité de courant de sortie de la cellule de batterie.

17. Procédé selon la revendication 16, dans lequel la commande de la quantité de courant de sortie de la cellule de batterie inclut la commande pour réduire la quantité de courant de sortie requise pour la cellule de batterie à une valeur seuil ou inférieure dans le mode de décharge.

18. Procédé selon la revendication 13, dans lequel la commande de la charge et de la décharge de la cellule de batterie selon le résultat de comparaison inclut, lorsque la cellule de batterie est chargée pendant une durée supérieure ou égale à une quatrième période de temps dans une condition de température inférieure ou égale à une deuxième température de décharge prédéfinie dans un mode de décharge, la transmission d'un quatrième signal de commande au système de batterie pour bloquer un commutateur à l'intérieur du système de batterie afin d'empêcher la décharge de la cellule de batterie.

19. Procédé selon la revendication 13, dans lequel la commande de la charge et de la décharge de la cellule de batterie selon le résultat de comparaison inclut, lorsque la cellule de batterie est chargée pendant une durée supérieure ou égale à une cinquième période de temps dans une condition de température inférieure ou égale à une troisième température de décharge prédéfinie dans un mode de décharge, la transmission d'un cinquième signal de commande à la cellule de batterie pour bloquer un commutateur de décharge de la cellule de batterie.

20. Procédé selon la revendication 13, dans lequel le fait de déterminer s'il convient de bloquer de manière permanente la charge et la décharge de la cellule de batterie inclut la mise à jour de la période de temps de charge accumulée par reflet du temps de charge dans la période de temps de charge accumulée.
